# EUROPEAN PATENT SPECIFICATION

(11) **EP 4 064 103 B1**
(45) Date of publication and mention of the grant of the patent: **06.05.2026**
(21) Application number: 22163633.5
(22) Date of filing: 22.03.2022
(51) Int. Cl.: G06F 30/23

(54) **METHOD FOR IMPROVING A FORMING RATE OF A VEHICLE-BODY STAMPED PART**
VERFAHREN ZUM VERBESSERN EINER FORMGEBUNGSRATE EINES KAROSSERIESTANZTEILS
PROCÉDÉ POUR AMÉLIORER UNE CADENCE DE FORMAGE D'UNE PIÈCE ESTAMPÉE DE CARROSSERIE DE VÉHICULE

(30) Priority: 23.03.2021 CN 202110309037
(43) Date of publication of application: 28.09.2022
(73) Proprietor: Nio Technology (Anhui) Co., Ltd, Hefei City, Anhui 230601 (CN)
(72) Inventor: RAO, Hui, Shanghai (CN); WU, Jianyong, Shanghai (CN); WU, Yanlin, Shanghai (CN); LIU, Bing, Shanghai (CN)
(74) Representative: Vossius & Partner Patentanwälte Rechtsanwälte mbB

(56) References cited:
- MOLE N. ET AL: "A 3D forming tool optimisation method considering springback and thinning compensation", JOURNAL OF MATERIALS PROCESSING TECHNOLOGY, vol. 214, no. 8, 1 August 2014 (2014-08-01), NL, pages 1673 - 1685, XP055950920, ISSN: 0924-0136, DOI: 10.1016/j.jmatprotec.2014.03.017
- ZHANG DEHAI ET AL: "A novel 3D optical method for measuring and evaluating springback in sheet metal forming process", MEASUREMENT, INSTITUTE OF MEASUREMENT AND CONTROL. LONDON, GB, vol. 92, 18 June 2016 (2016-06-18), pages 303 - 317, XP029644886, ISSN: 0263-2241, DOI: 10.1016/J.MEASUREMENT.2016.06.032
- LIN B T ET AL: "Application of an integrated RE/RP/CAD/CAE/CAM system for magnesium alloy shell of mobile phone", JOURNAL OF MATERIALS PROCESSING TECHNOLOGY, ELSEVIER, NL, vol. 209, no. 6, 19 March 2009 (2009-03-19), pages 2818 - 2830, XP026001532, ISSN: 0924-0136, [retrieved on 20080626], DOI: 10.1016/J.JMATPROTEC.2008.06.032

## Description

### Technical Field

The invention relates to the technical field of vehicle design, and specifically provides a method for improving a forming rate of a vehicle-body stamped part made of aluminium plates.

### Background Art

With the continuous improvement of people's living standards, private vehicles have become a main means of transport for consumers. The purchase of vehicles is included by more and more vehicle-free families in their short-term plans, and many vehicle-owned families also plan to add new vehicles to cater to the needs of family members. With the continuous expansion of the family vehicle market and the booming prospects, more and more vehicle manufacturers have sprung up, and the market competition has become more and more fierce, the fierce competition environment puts forward higher requirements on the speed of research and development of various vehicle manufacturers.

In the process of research and development, the design of a unique vehicle body usually requires a lot of time, manpower, material resources, and financial resources. In order to speed up the progress of research and development and reduce the costs of research and development and manufacturing, usually further modifications are made to a new type of vehicle body design, and then upgraded vehicle body styling is launched. Specifically, the partial styling of a previous version of vehicle body is modified in the direction of the new design concept to obtain the upgraded vehicle body styling. However, in a manufacturing phase, a relatively large quantity of defects may emerge in the stamped part that constitutes the vehicle body in a mass production phase, and the stamped part has a high scrap rate, which increases the manufacturing costs. Under the trend of high-end vehicles pursuing lightweight, all-aluminum vehicle bodies have become one of the main choices, and the forming difficulty of aluminum plates is higher than that of steel plates, and the defects and scrapping of aluminum plate stamping are more prominent.

Thus, there is a need for a new technical solution in the art to solve the above problems.

Sheet-metal forming optimisation methods are known in the art. For example, Mole et al., Journal of Materials Processing Technology 214 (2014), doi: 10.1016/ j.jmatprotec.2014.03.017, discloses an iterative forming optimisation method based on computer simulation, in which the geometry of a simulated formed part is compared with a reference geometry and the die and/or punch geometry is corrected when deviations exceed a prescribed tolerance, taking into account forming-related effects such as springback and sheet thinning.

### Summary of the Invention

The invention is defined by claim 1, with preferred embodiments specified in the dependent claims.

In a preferred technical solution of the above method, the step of "scanning the stamped part to obtain point cloud data" includes: scanning the stamped part placed on a gauge platform to obtain the point cloud data.

In a preferred technical solution of the above method, the step of "adjusting a shape, a size, and/or a material of a second portion that is the same as the first portion on an original design model of the stamped part to obtain a target design model" includes: adjusting the shape and the size of the second portion on the original design model to obtain an adjusted model; performing a simulation analysis on the adjusted model to determine whether a probability of occurrence of a defect in a third portion that is the same as the second portion on the adjusted model is less than a first preset value; and if the probability of occurrence of the defect in the third portion is less than the first preset value, using the adjusted model as the target design model.

In a preferred technical solution of the above method, the step of "adjusting a shape, a size, and/or a material of a second portion that is the same as the first portion on an original design model of the stamped part to obtain a target design model" further includes: if the probability of occurrence of the defect in the third portion is not less than the first preset value, using the original design model as the target design model after a material of the second portion on the original design model has been adjusted to a material with a higher forming performance index.

In a preferred technical solution of the above method, the step of "adjusting the shape and the size of the second portion on the original design model to obtain an adjusted model" includes: after the shape and the size of the second portion on the original design model are adjusted, determining whether there is an interference between the adjusted model and a part that fits into the adjusted model; and if there is no interference, using, as the adjusted model, a model obtained after the shape and the size of the second portion on the original design model have been adjusted.

In a preferred technical solution of the above method, if there is an interference, using the original design model as the target design model after a material of the second portion on the original design model has been adjusted to a material with a higher forming performance index.

In a preferred technical solution of the above method, the step of "adjusting a shape and a size of the second portion" includes: adjusting a draft angle and/or a fillet size of the second portion.

In a preferred technical solution of the above method, the defect rate includes a crack scrap rate.

In a preferred technical solution of the above method, the step of "scanning the stamped part to obtain point cloud data" includes: scanning the stamped part by using a stereo camera system to obtain the point cloud data.

Those skilled in the art can understand that, in the technical solution of the invention, the method for improving the design of a vehicle-body stamped part includes: obtaining thinned portions with thinning rates exceeding a standard rate on a stamped part that has been formed; screening a first portion with a defect rate and/or a defect type not meeting a preset requirement from the thinned portions; and adjusting a shape, a size, and/or a material of a second portion that is the same as the first portion on an original design model of the stamped part to obtain a target design model.

In a design phase, after a design improvement is made to the stamped part, designers may use mechanical analysis software to perform a mechanical analysis on the designed stamped part model and assess the risk of defects, but precision of a stamping device, possible allowable defects in blanks to be stamped, and other factors may increase the scrap rate of a stamped part in a manufacturing process. With the method for improving the design of a vehicle-body stamped part according to the invention, in a process of improving the design of vehicle body styling, the improvement is made based on an original design model of a previous version of vehicle-body stamped part and actual information of the previous version of vehicle-body stamped part after mass production, and this can not only ensure a fast research and development speed, but also avoid a high scrap rate of a newly designed vehicle-body stamped part in a manufacturing phase, thereby greatly reducing research and development and manufacturing costs.

Preferably, the step of "obtaining thinned portions with thinning rates exceeding a standard rate on a stamped part that has been formed" includes: scanning the stamped part to obtain point cloud data; constructing a three-dimensional model based on the point cloud data; and comparing the three-dimensional model with the original design model of the stamped part to obtain the thinned portions with thinning rates exceeding the standard rate on the stamped part. The stamped part is scanned to obtain the point cloud data, the three-dimensional model is constructed based on the point cloud data, the three-dimensional model is compared with the original design model of the stamped part to obtain the thinned portions with thinning rates exceeding the standard rate on the stamped part, so that a thinned portion that appears in a process of forming of a stamped part can be obtained more accurately and comprehensively. Therefore, when the improvement is made based on an original design model of a previous version of vehicle-body stamped part and actual information of the previous version of vehicle-body stamped part after mass production, the risk of defects occurring in the newly designed stamped part in a manufacturing process can be reduced more comprehensively and accurately.

Preferably, the step of "scanning the stamped part to obtain point cloud data" includes: scanning the stamped part placed on a gauge platform to obtain the point cloud data. The stamped part is placed on the gauge platform for scanning to obtain the point cloud data, so as to avoid deformation of different portions of the stamped part due to gravity and irregular support forces, thereby avoiding a deviation between the three-dimensional model constructed based on the acquired point cloud data and an actual shape and size obtained after stamping construction. Therefore, it is possible to obtain the thinned portions with thinning rates exceeding the standard rate on the stamped part more accurately.

Preferably, the step of "adjusting a shape, a size, and/or a material of a second portion that is the same as the first portion on an original design model of the stamped part to obtain a target design model" includes: adjusting the shape and the size of the second portion on the original design model to obtain an adjusted model; performing a simulation analysis on the adjusted model to determine whether a probability of occurrence of a defect in a third portion that is the same as the second portion on the adjusted model is less than a first preset value; and if the probability of occurrence of the defect in the third portion is less than the first preset value, using the adjusted model as the target design model. With this setting, after the shape and the size of the second portion on the original design model are adjusted to obtain the adjusted model, further the simulation analysis is performed on the adjusted model, it is determined whether the probability of occurrence of the defect in the third portion that is the same as the second portion on the adjusted model is less than the first preset value, and when the probability of occurrence of the defect is less than the first preset value, the adjusted model is used as the target design model. This can more effectively reduce the risk of defects occurring in the stamped part in a manufacturing process.

Preferably, the step of "adjusting a shape, a size, and/or a material of a second portion that is the same as the first portion on an original design model of the stamped part to obtain a target design model" further includes: if the probability of occurrence of the defect in the third portion is not less than the first preset value, using the original design model as the target design model after a material of the second portion on the original design model has been adjusted to a material with a higher forming performance index. With this setting, when the risk of defects occurring in the stamped part in the manufacturing process cannot be reduced by adjusting the size, the risk of defects occurring in the stamped part in the manufacturing process can be effectively reduced by replacing the material with a material with a higher forming performance index. Similarly, it can also reduce the impact of direct replacement of the material on manufacturing costs as a whole.

Preferably, the step of "adjusting the shape and the size of the second portion on the original design model to obtain an adjusted model" includes: after the shape and the size of the second portion on the original design model are adjusted, determining whether there is an interference between the adjusted model and a part that fits into the adjusted model; if there is no interference, using, as the adjusted model, a model obtained after the shape and the size of the second portion on the original design model have been adjusted; and if there is an interference, using the original design model as the target design model after a material of the second portion on the original design model has been adjusted to a material with a higher forming performance index. With this setting, the following two cases can be avoided: There being an interference of the shape and the size of the designed stamped part with the part that fits into the adjusted model may cause the stamped part to be scrapped after manufacturing, and there being an interference of the shape and the size of the designed stamped part with the part that fits into the adjusted model requires a shape and a size of the part that fits into the adjusted model to be adjusted to affect the design and manufacturing of the part that fits into the adjusted model. Therefore, the overall research and development speed of a vehicle body can be improved as a whole.

### Brief Description of the Drawings

Preferred embodiments of the invention are described below with reference to the accompanying drawings, in which:
FIG. 1 is a schematic diagram of main steps of a method for improving the design of a vehicle-body stamped part not falling within the scope of the claims; and
FIG. 2 is a schematic diagram of specific steps of a method for improving the design of a vehicle-body stamped part according to an embodiment of the invention.

### Detailed Description of Embodiments

Firstly, it should be understood by those skilled in the art that embodiments described below are only for explaining the technical principles of the invention and are not intended to limit the scope of protection of the invention. For example, although the embodiments of the invention are described in conjunction with the design improvement method of a vehicle body panel, this does not limit the scope of protection of the invention, and those skilled in the art can make adjustments according to requirements so as to adapt to specific application scenarios. For example, the method for improving the design of a vehicle-body stamped part according to the invention is also applicable to a vehicle-body stamped part such as hoods, trunk lids, and fenders. Apparently, the adjusted technical solution shall still fall within the scope of protection of the invention.

It should be noted that, in the description of the invention, the terms "first", "second", and "third" are merely used for description, but cannot be understood as indicating or implying the relative importance.

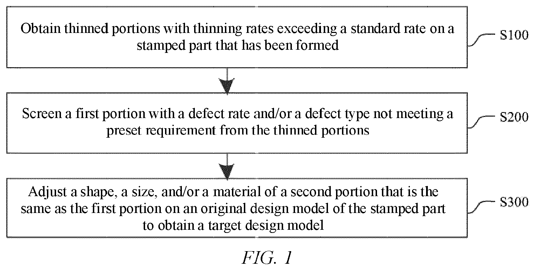

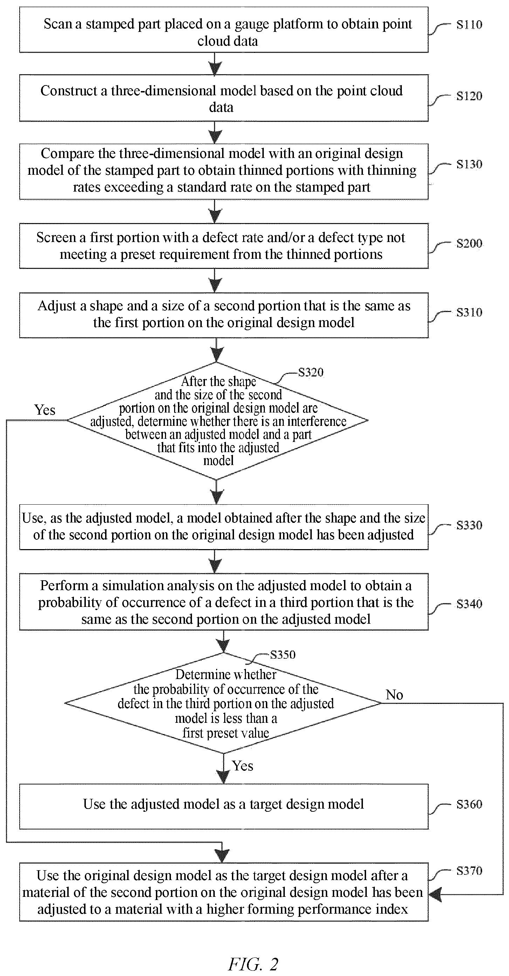

The method for improving the design of a vehicle-body stamped part according to the invention is described with reference to FIGs. 1 and 2. FIG. 1 is a schematic diagram of main steps of a method for improving the design of a vehicle-body stamped part not falling within the scope of the claims, and FIG. 2 is a schematic diagram of specific steps of a method for improving the design of a vehicle-body stamped part according to an embodiment of the invention.

In view of the problem pointed out in the background art that the existing vehicle body design method is likely to cause a high scrap rate of a stamped part constituting a vehicle body in a manufacturing process, the invention provides a method for improving the design of a vehicle-body stamped part. As shown in FIG. 1, the method for improving the design of a vehicle-body stamped part not falling within the scope of the claims includes the following steps:
Step S100: thinned portions with thinning rates exceeding a standard rate on a stamped part that has been formed are obtained.

That is, for a previous version of stamped part that has already been in mass production, a stamped part that has been stamped and formed is inspected and analyzed, to obtain thinned portions with thinning rates exceeding a standard rate on the stamped part that has been formed.

Step S200: a first portion with a defect rate and/or a defect type not meeting a preset requirement is screened from the thinned portions.

In the forming process of the stamped part, the stamped part may have surface wrinkles, scratches, burrs, tears, and other defects. Burr defects can be eliminated through a grinding process, and have little impact on mechanical properties of the stamped part. Therefore, during screening of the first portion from the thinned portions, a portion with surface wrinkles, tears, scratches, and other defects may be screened as the first portion. Certainly, it may alternatively be the case that only a defect rate or a defect type not meeting a preset requirement in a same portion is used as the basis for determining whether the portion is the first portion. For example, among stamped parts in mass production, when a ratio of stamped parts with a tear in a same portion to the total number of stamped parts in the batch (which is a defect rate) is greater than a preset ratio, the portion on the stamped part is used as the first portion. The defect rate may alternatively be a defect scrap rate of stamped parts in mass production. It can be understood that it may alternatively be the case that both the defect type and the defect rate are used as the basis for determining whether a certain portion of the stamped part is the first portion.

Step S300: a shape, a size, and/or a material of a second portion that is the same as the first portion on an original design model of the stamped part are/is adjusted to obtain a target design model.

The target design model may be obtained by only adjusting the shape and the size of the second portion that is the same as the first portion on the original design model of the stamped part, or by only adjusting a material of the second portion that is the same as the first portion on the original design model of the stamped part, or by adjusting the shape, the size, and the material of the second portion that is the same as the first portion on the original design model of the stamped part.

Due to factors such as the wear of the stamping device used to manufacture a stamped part in the workshop, dimensional accuracy may be reduced. For blanks to be stamped for manufacturing a stamped part, there may be allowable defects in blanks to be stamped in different batches. These factors may lead to an increase in a scrap rate of stamped parts in the manufacturing process. With the method for improving the design of a vehicle-body stamped part according to the invention, in a process of improving the design of vehicle body styling, for a design improvement of the stamped part, the thinned portions with thinning rates exceeding the standard rate on the previous version of vehicle-body stamped part are obtained, the first portion with the defect rate and/or the defect type not meeting the preset requirement is screened from the thinned portions, and the shape, the size, and/or the material of the second portion that is the same as the first portion on the original design model of the stamped part are/is adjusted to obtain the target design model, that is, the improvement is made based on an original design model of a previous version of vehicle-body stamped part and actual information of the previous version of vehicle-body stamped part after mass production, and this can not only ensure a fast research and development speed, but also avoid a high scrap rate of a newly designed vehicle-body stamped part in a manufacturing phase, thereby greatly reducing research and development and manufacturing costs. For a stamped part made of aluminum plates, the method in the invention can avoid defects and scrapping of a stamped part in the manufacturing phase to a greater extent, and increase a forming rate of stamped parts, and reduce research and development and manufacturing costs.

Next, an embodiment of the invention will be described in conjunction with FIG. 2 and a design improvement method of an aluminum alloy vehicle body panel.

As shown in FIG. 2, in an embodiment of the invention, step S100 includes the following steps:

Step S110: the stamped part placed on a gauge platform is scanned to obtain the point cloud data.

Under the trend of energy conservation and emission reduction and lightweight, many vehicle-body stamped parts start to be manufactured by stamping aluminum alloy materials. Due to a large size of a stamped vehicle body panel, when the vehicle body panel is directly placed on the ground, its fulcrum on the ground is different from its fulcrum after it is assembled to a carframe, and a slight deformation occurs in a local area of the vehicle body panel. Therefore, the vehicle body panel of the previous version of vehicle body in mass production is placed on the gauge platform, and an ATOS stereo camera system is used to scan the vehicle body panel placed on the gauge platform to obtain the point cloud data. In this way, it is possible to avoid a deviation between the three-dimensional model constructed based on the acquired point cloud data and an actual shape and size obtained after stamping construction.

Step S120: a three-dimensional model is constructed based on the point cloud data.

The point cloud data of the vehicle body panel is imported into AUTOFORM software to construct the three-dimensional model.

Step S130: the three-dimensional model is compared with the original design model of the stamped part to obtain the thinned portions with thinning rates exceeding the standard rate on the stamped part.

In the AUTOFORM software, the constructed three-dimensional model and the original design model of the stamped part are placed in the same three-dimensional coordinate system, and the constructed three-dimensional model and the original model of the stamped part are compared and analyzed, to obtain the thinned portions with thinning rates exceeding the standard rate on the stamped part. For example, an upper limit value of a qualified thinning rate is 16%, and a thinned portion with a thinning rate exceeding 16% on the stamped part is determined.

Step 300 includes the following steps:
Step S310: the shape and the size of the second portion that is the same as the first portion on the original design model are adjusted.

Specifically, a draft angle of the second portion that is the same as the first portion on the original design model is adjusted, or a fillet size of the second portion that is the same as the first portion on the original design model is adjusted, or a draft angle of one part of the second portion that is the same as the first portion on the original design model is adjusted, and a fillet size of the other part is adjusted.

Step S320: after the shape and the size of the second portion on the original design model are adjusted, whether there is an interference between the adjusted model and a part that fits into the adjusted model is determined; if there is an interference, step S370 is performed; and if there is no interference, step S330 is performed.

Step S330: a model obtained after the shape and the size of the second portion on the original design model have been adjusted is used as the adjusted model.

Step S340: a simulation analysis is performed on the adjusted model to obtain a probability of occurrence of a defect in a third portion that is the same as the second portion on the adjusted model.

Step S350: whether the probability of occurrence of the defect in the third portion on the adjusted model is less than a first preset value is determined; if the probability of occurrence of the defect in the third portion is less than the first preset value, step S360 is performed; and if the probability of occurrence of the defect in the third portion is not less than the first preset value, step S370 is performed.

Step S360: the adjusted model is used as the target design model.

Step S370: the original design model is used as the target design model after a material of the second portion on the original design model has been adjusted to a material with a higher forming performance index.

In the process of research and development and design, different parts are designed by different departments at the same time to speed up the progress of research and development and design, and there is an assembly relationship between different parts. Therefore, after the shape and the size of the second portion that is the same as the first portion on the original design model are adjusted, there is a need to determine whether there is an interference between the adjusted model and a part that fits into the adjusted model. For example, the adjusted shape and size are sent to other departments to determine whether there is an interference, if there is no interference, the model obtained after the shape and the size of the second portion on the original design model have been adjusted is used as the adjusted model, and if there is an interference, the original design model is used as the target design model after a material of the second portion on the original design model has been adjusted to a material with a higher forming performance index. After the adjusted model is obtained, a simulation analysis is performed on the adjusted model to obtain the probability of occurrence of the defect in the third portion that is the same as the second portion on the adjusted model, whether the probability of occurrence of the defect in the third portion on the adjusted model is less than the first preset value is determined (for example, 5%), if the probability of occurrence of the defect in the third portion is less than the first preset value, the adjusted model is used as the target design model, and if the probability of occurrence of the defect in the third portion is not less than the first preset value, the original design model is used as the target design model after the material of the second portion on the original design model has been adjusted to the material with a higher forming performance index.

With this setting, the following two cases can be avoided: There being an interference of the shape and the size of the designed stamped part with the part that fits into the adjusted model may cause the stamped part to be scrapped after manufacturing, and there being an interference of the shape and the size of the designed stamped part with the part that fits into the adjusted model requires a shape and a size of the part that fits into the adjusted model to be adjusted to affect the design and manufacturing of the part that fits into the adjusted model. Therefore, the overall research and development speed of a vehicle body can be improved as a whole. Similarly, the risk of defects occurring in the stamped part in a manufacturing process may be reduced more effectively, and the impact of direct replacement of the material on manufacturing costs may be reduced as a whole.

Those skilled in the art can understand that the first preset value being 5% is only a specific setting manner, and those skilled in the art can make adjustments according to requirements so as to adapt to different application scenarios. For example, the first preset value may be 3%, 6%, 7%, etc. Using the ATOS stereo camera system to scan the stamped part is also a particular implementation. Those skilled in the art may alternatively use a three-dimensional laser scanner, a structured light source converter, an X-ray computed tomography device, or another suitable scanning device to scan the stamped part to obtain point cloud data. In addition, importing the point cloud data of the vehicle body panel into the AUTOFORM software to construct the three-dimensional model is also a particular implementation. Those skilled in the art may alternatively import the point cloud data of the vehicle body panel into Imageware, PolyWorks, Rapidform, Geomagic, or other software to construct a three-dimensional model. In addition, placing the stamped part on the gauge platform for scanning is a preferred implementation. Those skilled in the art may alternatively scan the vehicle body panel to obtain point cloud data after the vehicle body panel is assembled to the vehicle body.

In another feasible implementation, the method for improving the design of a vehicle-body stamped part may not include step S340 and step S350 in the above embodiment, and step S360 is directly performed after step S330, that is, after the adjusted model is obtained, the adjusted model is used as the target design model directly without a simulation analysis. Nevertheless, this implementation is weaker in the effect of reducing the risk of defects occurring in the stamped part in a manufacturing process than the above embodiment.

In another feasible implementation, the method for improving the design of a vehicle-body stamped part may not include step S320 in the above embodiment, and step S330 is directly performed after step S310, that is, after the shape and the size of the second portion that is the same as the first portion on the original design model are adjusted, the model obtained after the adjustment is directly used as the target design model without determining whether there is an interference between the adjusted model and a part that fits into the adjusted model. In this way, this is applicable to situations where certain stamped parts have no part that fits into them or there is a large clearance between the stamped parts and parts that fit into them.

In another feasible implementation, manual measurement may alternatively be used to measure and screen the thinned portions with thinning rates exceeding the standard rate on the stamped part that has been formed. However, this may require a lot of manpower and measurement efficiency is low.

It can be learned from the above description that in the technical solution of the invention, the method for improving the design of a vehicle-body stamped part includes: obtaining thinned portions with thinning rates exceeding a standard rate on a stamped part that has been formed; screening a first portion with a defect rate and/or a defect type not meeting a preset requirement from the thinned portions; and adjusting a shape, a size, and/or a material of a second portion that is the same as the first portion on an original design model of the stamped part to obtain a target design model. With the method for improving the design of a vehicle-body stamped part according to the invention, in a process of improving the design of vehicle body styling, the improvement is made based on an original design model of a previous version of vehicle-body stamped part and actual information of the previous version of vehicle-body stamped part after mass production, and this can not only ensure a fast research and development speed, but also avoid a high scrap rate of a newly designed vehicle-body stamped part in a manufacturing phase, thereby greatly reducing research and development and manufacturing costs.

Heretofore, the technical solutions of the invention have been described in conjunction with the preferred embodiments shown in the drawings, however, those skilled in the art can readily understand that the scope of protection as defined by the claims is obviously not limited to these specific embodiments. Those skilled in the art could make equivalent changes or substitutions to the related technical features without departing from the scope of the claims, and all the technical solutions after the changes or the substitutions shall fall within the scope of the claims.

## Claims

1. A method for improving a forming rate of a vehicle-body stamped part made of aluminium plates, wherein the method comprises:
scanning (S110) the stamped part to obtain point cloud data;
constructing (S120) a three-dimensional model based on the point cloud data;
comparing (S130) the three-dimensional model with an original design model of the stamped part in a same three-dimensional coordinate system to obtain thinned portions with thinning rates exceeding the standard rate on the stamped part;
inspecting (S200) the stamped part to screen a first portion with a defect rate and/or a defect type not meeting a preset requirement from the thinned portions; and
adjusting (S300) a shape, a size, and/or a material of a second portion that is the same as the first portion on the original design model of the stamped part to obtain a target design model;
manufacturing stamped parts using the target design model.

2. The method according to claim 1, wherein the step of "scanning the stamped part to obtain point cloud data" comprises:
scanning (S110) the stamped part placed on a gauge platform to obtain the point cloud data.

3. The method according to claim 1, wherein the step of "adjusting a shape, a size, and/or a material of a second portion that is the same as the first portion on an original design model of the stamped part to obtain a target design model" comprises:
adjusting (S310) the shape and the size of the second portion on the original design model to obtain an adjusted model;
performing (S340) a simulation analysis on the adjusted model to determine whether a probability of occurrence of a defect in a third portion that is the same as the second portion on the adjusted model is less than a first preset value; and
if the probability of occurrence of the defect in the third portion is less than the first preset value, using (S350; S360) the adjusted model as the target design model.

4. The method according to claim 3, **characterized in that** the step of "adjusting a shape, a size, and/or a material of a second portion that is the same as the first portion on an original design model of the stamped part to obtain a target design model" further comprises: if the probability of occurrence of the defect in the third portion is not less than the first preset value, using (S350; S370) the original design model as the target design model after a material of the second portion on the original design model has been adjusted to a material with a higher forming performance index.

5. The method according to claim 3, wherein the step of "adjusting the shape and the size of the second portion on the original design model to obtain an adjusted model" comprises:
after the shape and the size of the second portion on the original design model are adjusted, determining (S320) whether there is an interference between the adjusted model and a part that fits into the adjusted model; and
if there is no interference, using (S330), as the adjusted model, a model obtained after the shape and the size of the second portion on the original design model have been adjusted.

6. The method according to claim 5, wherein if there is an interference, using (S370) the original design model as the target design model after a material of the second portion on the original design model has been adjusted to a material with a higher forming performance index.

7. The method according to any one of claims 1 to 6, wherein the step of "adjusting a shape and a size of the second portion" comprises:
adjusting a draft angle and/or a fillet size of the second portion.

8. The method according to any one of claims 1 to 6, wherein the defect rate comprises a crack scrap rate.

9. The method according to claim 1, wherein the step of "scanning the stamped part to obtain point cloud data" comprises:
scanning the stamped part by using a stereo camera system to obtain the point cloud data.

## Patentansprüche

1. Verfahren zum Verbessern einer Formgebungsrate eines Karosseriestanzteils aus Aluminiumplatten,
wobei das Verfahren Folgendes umfasst:
Abtasten (S110) des Stanzteil, um Punktwolkendaten zu erhalten;
Erstellen (S120) eines dreidimensionalen Modells basierend auf den Punktwolkendaten;
Vergleichen (S130) des dreidimensionalen Modells mit einem ursprünglichen Konstruktionsmodell des Stanzteils in einem gleichen dreidimensionalen Koordinatensystem, um abgetragene Abschnitte mit Abtragsraten zu erhalten, die die Standardrate an dem Stanzteil übersteigen;
Überprüfen (S200) des Stanzteils, um einen ersten Abschnitt mit einer Defektrate und/oder einer Defektart, die eine voreingestellte Anforderung nicht erfüllt, aus den abgetragenen Abschnitten auszusortieren; und
Anpassen (S300) einer Form, einer Größe und/oder eines Materials eines zweiten Abschnitts, der der gleiche wie der erste Abschnitt an dem ursprünglichen Konstruktionsmodell des Stanzteils ist, um ein Zielkonstruktionsmodell zu erhalten;
Herstellen von Stanzteilen unter Verwenden des Zielkonstruktionsmodells.

2. Verfahren nach Anspruch 1, wobei der Schritt zum "Abtasten des Stanzteils, um Punktwolkendaten zu erhalten," Folgendes umfasst:
Abtasten (S110) des Stanzteils, das auf einer Messplattform platziert ist, um die Punktwolkendaten zu erhalten.

3. Verfahren nach Anspruch 1, wobei der Schritt zum "Anpassen einer Form, einer Größe und/oder eines Materials eines zweiten Abschnitts, der der gleiche wie der erste Abschnitt an einem ursprünglichen Konstruktionsmodell des Stanzteils ist, um ein Zielkonstruktionsmodell zu erhalten," Folgendes umfasst:
Anpassen (S310) der Form und der Größe des zweiten Abschnitts an dem ursprünglichen Konstruktionsmodell, um ein angepasstes Modell zu erhalten;
Durchführen (S340) einer Simulationsanalyse an dem angepassten Modell, um zu bestimmen, ob eine Wahrscheinlichkeit eines Auftretens eines Defekts in einem dritten Abschnitt, der der gleiche wie der zweite Abschnitt an dem angepassten Modell ist, kleiner als ein erster voreingestellter Wert ist; und
wenn die Wahrscheinlichkeit eines Auftretens des Defekts in dem dritten Abschnitt kleiner als der erste voreingestellte Wert ist, Verwenden (S350; S360) des angepassten Modells als das Zielkonstruktionsmodell.

4. Verfahren nach Anspruch 3, **dadurch gekennzeichnet, dass** der Schritt zum "Anpassen einer Form, einer Größe und/oder eines Materials eines zweiten Abschnitts, der der gleiche wie der erste Abschnitt an einem ursprünglichen Konstruktionsmodell des Stanzteils ist, um ein Zielkonstruktionsmodell zu erhalten," ferner Folgendes umfasst: wenn die Wahrscheinlichkeit eines Auftretens des Defekts in dem dritten Abschnitt nicht kleiner als der erste voreingestellte Wert ist, Verwenden (S350; S370) des ursprünglichen Konstruktionsmodells als das Zielkonstruktionsmodell, nachdem ein Material des zweiten Abschnitts an dem ursprünglichen Konstruktionsmodell auf ein Material mit einem höheren Formgebungsleistungsindex angepasst wurde.

5. Verfahren nach Anspruch 3, wobei der Schritt zum "Anpassen der Form und der Größe des zweiten Abschnitts an dem ursprünglichen Konstruktionsmodell, um ein angepasstes Modell zu erhalten," Folgendes umfasst:
nachdem die Form und die Größe des zweiten Abschnitts an dem ursprünglichen Konstruktionsmodell angepasst sind, Bestimmen (S320), ob eine Interferenz zwischen dem angepassten Modell und einem Teil besteht, das in das angepasste Modell passt; und
wenn keine Interferenz besteht, Verwenden (S330), als das angepasste Modell, eines Modells, das erhalten wird, nachdem die Form und die Größe des zweiten Abschnitts an dem ursprünglichen Konstruktionsmodell angepasst wurden.

6. Verfahren nach Anspruch 5, wobei, wenn eine Interferenz besteht, Verwenden (S370) des ursprünglichen Konstruktionsmodells als das Zielkonstruktionsmodell, nachdem ein Material des zweiten Abschnitts an dem ursprünglichen Konstruktionsmodell auf ein Material mit einem höheren Formgebungsleistungsindex angepasst wurde.

7. Verfahren nach einem der Ansprüche 1 bis 6, wobei der Schritt zum "Anpassen einer Form und einer Größe des zweiten Abschnitts" Folgendes umfasst:
Anpassen eines Formschrägenwinkels und/oder einer Kehlnahtgröße des zweiten Abschnitts.

8. Verfahren nach einem der Ansprüche 1 bis 6, wobei die Defektrate eine Rissausschussrate umfasst.

9. Verfahren nach Anspruch 1, wobei der Schritt zum "Abtasten des Stanzteils, um Punktwolkendaten zu erhalten," Folgendes umfasst:
Abtasten des Stanzteils unter Verwendung eines Stereokamerasystems, um die Punktwolkendaten zu erhalten.

## Revendications

1. Procédé pour améliorer une cadence de formage d'une pièce estampée de carrosserie de véhicule faite de plaques d'aluminium, dans lequel le procédé comprend :
le balayage (S110) de la pièce estampée pour obtenir des données de nuage de points ;
la construction (S120) d'un modèle tridimensionnel sur la base des données de nuage de points ;
la comparaison (S130) du modèle tridimensionnel à un modèle de conception d'origine de la pièce estampée dans un même système de coordonnées tridimensionnelles pour obtenir des parties amincies avec des cadences d'amincissement dépassant la cadence standard sur la pièce estampée ;
l'inspection (S200) de la pièce estampée pour effectuer la vérification d'une première partie avec une cadence de défaut et/ou un type de défaut ne respectant pas une exigence prédéfinie par rapport aux parties amincies ; et
l'ajustement (S300) d'une forme, d'une taille, et/ou d'un matériau d'une seconde partie qui est la même que la première partie sur le modèle de conception d'origine de la pièce estampée pour obtenir un modèle de conception cible ;
la fabrication de pièces estampées en utilisant le modèle de conception cible.

2. Procédé selon la revendication 1, dans lequel l'étape « le balayage de la pièce estampée pour obtenir données de nuage de points » comprend :
le balayage (Sll0) de la pièce estampée placée sur une plate-forme calibre pour obtenir les données de nuage de points.

3. Procédé selon la revendication 1, dans lequel l'étape « l'ajustement d'une forme, d'une taille, et/ou d'un matériau d'une seconde partie qui est la même que la première partie sur un modèle de conception d'origine de la pièce estampée pour obtenir un modèle de conception cible » comprend :
l'ajustement (S310) de la forme et de la taille de la seconde partie sur le modèle de conception d'origine pour obtenir un modèle ajusté ;
la réalisation (S340) d'une analyse de simulation sur le modèle ajusté pour déterminer le fait qu'une probabilité d'apparition d'un défaut dans une troisième partie qui est la même que la deuxième partie sur le modèle ajusté est, ou n'est pas, inférieure à une première valeur prédéfinie ; et
si la probabilité d'apparition du défaut dans la troisième partie est inférieure à la première valeur prédéfinie, l'utilisation (S350 ; S360) du modèle ajusté en tant que modèle de conception cible.

4. Procédé selon la revendication 3, **caractérisé en ce que** l'étape « l'ajustement d'une forme, une taille, et/ou d'un matériau d'une deuxième partie qui est la même que la première partie sur un modèle de conception d'origine de la pièce estampée pour obtenir un modèle de conception cible » comprend en outre : si la probabilité d'apparition du défaut dans la troisième partie n'est pas inférieure à la première valeur prédéfinie, l'utilisation (S350 ; S370) du modèle de conception d'origine en tant que modèle de conception cible après qu'un matériau de la deuxième partie sur le modèle de conception d'origine a été ajusté à un matériau avec un indice de rendement de formage plus élevé.

5. Procédé selon la revendication 3, dans lequel l'étape « l'ajustement de la forme et de la taille de la deuxième partie sur le modèle de conception d'origine pour obtenir un modèle ajusté » comprend :
après que la forme et la taille de la deuxième partie sur le modèle de conception d'origine sont ajustées, la détermination (S320) du fait qu'il y a, ou n'y a pas, une interférence entre le modèle ajusté et une pièce qui va dans le modèle ajusté ; et
s'il n'y a aucune interférence, l'utilisation (S330), en tant que modèle ajusté, d'un modèle obtenu après que la forme et la taille de la deuxième partie sur le modèle de conception d'origine ont été ajustées.

6. Procédé selon la revendication 5, dans lequel s'il y a une interférence, l'utilisation (S370) du modèle de conception d'origine en tant que modèle de conception cible après qu'un matériau de la deuxième partie sur le modèle de conception d'origine a été ajusté à un matériau avec un indice de rendement de formage plus élevé.

7. Procédé selon l'une quelconque des revendications 1 à 6, dans lequel l'étape « l'ajustement d'une forme et d'une taille de la deuxième partie » comprend :
l'ajustement d'un angle de dépouille et/ou d'une taille de congé de la deuxième partie.

8. Procédé selon l'une quelconque des revendications 1 à 6, dans lequel la cadence de défaut comprend une cadence de mise au rebus en raison de fissure.

9. Procédé selon la revendication 1, dans lequel l'étape « le balayage de la pièce estampée pour obtenir données de nuage de points » comprend :
le balayage de la pièce estampée en utilisant un système de caméra stéréoscopique pour obtenir les données de nuage de points.
